Europäisches Patentamt

European Patent Office

Office européen des brevets

(19)

(11) Veröffentlichungsnummer: **0 089 539**

**B1**

(12) # EUROPÄISCHE PATENTSCHRIFT

(45) Veröffentlichungstag der Patentschrift:
23.07.86

(21) Anmeldenummer: **83102202.5**

(22) Anmeldetag: **07.03.83**

(51) Int. Cl.⁴: **C 08 F 36/18,** C 08 L 11/00 //
(C08L11/00, 11:00)

(54) Herstellung schwefelmodifizierter Chloroprenfestkautschuke.

(30) Priorität: **20.03.82 DE 3210285**

(43) Veröffentlichungstag der Anmeldung:
**28.09.83 Patentblatt 83/39**

(45) Bekanntmachung des Hinweises auf die Patenterteilung:
**23.07.86 Patentblatt 86/30**

(84) Benannte Vertragsstaaten:
**DE FR GB IT**

(56) Entgegenhaltungen:
**DE-A-1 807 298
FR-A-2 374 340
US-A-2 877 200**

(73) Patentinhaber: **BAYER AG, Konzernverwaltung RP
Patentabteilung, D-5090 Leverkusen 1 Bayerwerk
(DE)**

(72) Erfinder: **Musch, Rüdiger, Dr., Altenberger Dom
Strasse 169, D-5060 Bergisch Gladbach 2 (DE)**
Erfinder: **Göbel, Wilhelm, Dr., Max- Beckmann-
Strasse 37, D-5090 Leverkusen (DE)**
Erfinder: **Müller, Eberhard, Dr., Moltkestrasse 9,
D-4047 Dormagen (DE)**
Erfinder: **Konter, Wolfgang, Dr., Espenstrasse 49,
D-4040 Neuss 21 (DE)**

**Beschreibung**

Die Erfindung betrifft ein Verfahren zur Herstellung eines vulkanisierbaren elastomeren Chloropren-Schwefelcopolymerisates mit Viskositäten von 68 bis 35 ME, Festigkeiten > 20 MPa und Schwefelgehalten von etwa 0,3 bis 0,45 Gew.-% im Ansatz.

Schwefelmodifizierter Polychloroprenkautschuk besitzt viele wertvolle anwendungstechnische Eigenschaften und hat deshalb eine breite Anwendung gefunden. Eine gute Mastizierbarkeit und das Vulkanisationsvermögen ohne den Zusatz von Thioharnstoff-Beschleunigern müssen dabei besonders vorteilhaft bewertet werden. Das Polymere eignet sich aufgrund seiner hohen dynamischen Belastbarkeit bevorzugt für Artikel wie Keilriemen und Luftfederbälge.

Bei den S-modifizierten Chloroprenpolymeren haben Menge und Art des S-Einbaues einen großen Einfluß auf die Eigenschaften. Ist der Schwefelgehalt des Polymeren zu gering, so erhält man zwar eine hohe Festigkeit, aber man kann das Produkt nicht mehr durch Peptisation in ein für die Verarbeitung günstiges Viskositätsniveau abbauen. Ist der Schwefelgehalt zu hoch, erhält man ein viskositätsinstabiles Produkt mit ungenügenden Vulkanisateigenschaften. Bei einem mittleren Schwefelgehalt von etwa 0,3 bis 0,45 Gew.-% im Ansatz bezogen auf Chloropren erhält man den gewünschten Viskositätsbereich nur in aufwendiger Weise mit einem speziellen Peptisationsagens (US-PS 2 755 074), nicht jedoch die gewünschte Festigkeit.

Aufgabe der vorliegenden Erfindung ist es, ein Verfahren bereitzustellen, mit dem S-modifizierte vulkanisierbare Polychloroprenfestkautschuke erhalten werden, die bei Schwefelgehalten von etwa 0,3 bis 0,45 Gew.-% im Ansatz nach der Peptisation Viskositäten von 68 bis 35 ME und nach der Vulkanisation Festigkeiten 0 MPa aufweisen.

Die Aufgabe wird erfindungsgemäß dadurch gelöst, daß man Chloropren in wäßriger Emulsion in Gegenwart von 0,05 bis 0,4 Gew.-% Schwefel zu einem Latex I polymerisiert, Chloropren in wäßriger Emulsion in Gegenwart von 0,5 bis 1,5 Gew.-% Schwefel zu einem Latex II polymerisiert, die Latices I und II, gegebenenfalls zusammen mit weiteren schwefelmodifizierten Polychloroprenlatices im Verhältnis 4:1 bis 1:4 (bezogen jeweils auf Feststoff) umsetzt, die Mischung in üblicher Weise peptisiert und zum Festkautschuk aufarbeitet, wobei sich die Prozentangaben auf die Monomermenge beziehen. Peptisierung und Aufarbeitung können beispielsweise nach DE-OS 1 807 298 erfolgen.

Nach dem erfindungsgemäßen Verfahren werden schwefelmodifizierte Polychloroprenkautschuke mit mittleren Schwefelgehalten von etwa 0,3 bis 0,45 Gew.-% Schwefel unter Verwendung üblicher, leicht zugänglicher Peptisierungsmittel erhalten. Setzt man in analoger Weise Chloropren mit dieser Menge Schwefel in einstufiger Reaktion um, so erhält man Kautschuke des gewünschten Viskositätsbereiches nur mit speziellen Peptisierungsmittel, jedoch werden nach der Vulkanisation nur Festigkeiten unter 20 MPa erreicht. Die Angabe der Schwefelgehalte ist immer die eingesetzte Schwefelmenge.

Eine getrennte Peptisierung der Latices I und II, nachträgliche Vermischung und gemeinsame Aufarbeitung ergibt aufgrund eines stärkeren Viskositätsabbaues Kautschuke mit schlechterem Rohmaterial und Vulkanisateigenschaften, z.B. mit geringerer Lagerstabilität und niedrigeren Festigkeiten.

Auch das nachträgliche Mischen der festen Polymerisate z.B. auf der Walze ist für die Herstellung einer Vulkanisatmischung ungünstig, denn durch die doppelte Beanspruchung des Materials auf der Walze bei der Mischungsherstellung und beim Einarbeiten der Zuschlagstoffe, kommt es zu einem vorzeitigen unerwünschten Wiederanstieg der Mischungsviskosität.

Unter Chloropren-Polymerisaten werden in der vorliegenden Erfindung solche verstanden, bei denen bis zu 10 Gew.-% des Chloroprens durch andere copolymerisierbare Monomere wie 2,3-Dichlorbutadien, 1-Chlorbutadien, Butadien, Isopren, Acrylsäure, Methacrylsäure, Acrylnitril oder Methacrylnitril ersetzt sind. Vorzugsweise sind bis 5 Gew.-% durch 2,3-Dichlorbutadien ersetzt.

Die Molekulargewichtseinstellung der schwefel-modifizierten Polymeren wird im allgemeinen nicht durch während der Polymerisation zugesetzte Regler, sondern durch einen der Polymerisation nachgeschalteten sogenannten Peptisationsschritt erreicht. Unter Peptisation wird hier die Spaltung der Polymerkette an ihren Schwefelsegmenten verstanden. Dieser Schritt ist notwendig, da sich der Kautschuk nur in bestimmten Viskositätsbereichen optimal verarbeiten läßt. Das häufig eingesetzte Peptisationsagens Tetraethylthiuramdisulfid (TETD) kann dabei mit nukleophil wirkenden Substanzen, wie Aminen oder Dithiocarbamat, kombiniert werden (DE-OS 20 18 738, DE-AS 12 30 204). Der nach der Polymerisation erhaltene Latex wird üblicherweise bei 30-70°C peptisiert. Die Geschwindigkeit der Peptisation hängt unter anderem von der Menge des Peptisationsagens, von Art und Menge des Nukleophils, von der Temperatur und dem pH-Wert des Latex ab. Der Polymerabbau läßt sich im Latex oder am festen Rohpolymerisat, z.B. nach Gefrierkoagulation des Latex, durchführen. Bei Polychloropren-Kautschuken mit Schwefelgehalten von 0,3 bis 0,45 Gew.-% Schwefel war der Einsatz von TETD als Peptisationsagens zur Herstellung von Produkten im technologisch günstigen Bereich bisher nicht möglich.

Lagert man das feste Polymerisat bei Raumtemperatur, so sinkt die Mooney-Viskosität langsam weiter ab, durchläuft ein Minimum und steigt anschließend wiederan. Bei zu weitgehender Peptisation in der Latexphase steigt die Mooney-Viskosität des Polymerisats, insbesondere bei späterer stärkerer thermischer Belastung des Kautschuks, sofort an. Dieser Effekt ist nicht erwünscht und kann durch Nachsatz von TETD unmittelbar vor der Aufarbeitung des Latex zum Festkautschuk weitgehend verhindert werden.

Es zeigte sich nun, daß die erfindungsgemäß hergestellten Produkte nach der Aufarbeitung schon bei wesentlich geringeren TETD-Nachsätzen ein ausgezeichnetes Lagerungsverhalten zeigen, als dies bei Chloropren-Schwefel-Copolymerisaten mit vergleichbarem Schwefelgehalt der Fall ist.

2

**Beispiel 1**

Herstellung der Polymerlatices

990 g Chloropren und 10 g 2,3-Dichlorbutadien werden in 1500 g Wasser, dem 55 g disproportionierte Harzsäure (Feststoffgehalt 70%), 5 g Natriumsalz eines Naphthalinsulfonsäure-Formaldehyd-Kondensationsproduktes, 5 g Natriumhydroxid, 3 g wasserfreies Natriumpyrophosphat, 1 g Triisopropanolamin und 1 bis 12 g Schwefeldispersion (50 %ig) zugesetzt sind, emulgiert.

Als Katalysatorlösung werden 10 g Kaliumpersulfat und 0,2 g Natrium-é-Anthrachinonsulfat gelöst in 490 g Wasser vorbereitet.

Die Emulsion wird mit Stickstoff gespült, auf 50°C erwärmt und durch Zugabe von Katalysatorlösung gestartet. Während der Polymerisation wird weiter Katalysatorlösung so dosiert, daß die Temperatur des Ansatzes 50°C nicht übersteigt. Nach einem Monomerumsatz von 85% wird mit 1 g Phenothiazin oder 7 g TETD abgestoppt und das überschüssige Monomere bei vermindertem Druck durch Wasserdampfdestillation abgetrennt. Man erhält einen Latex mit einer Feststoffkonzentration von 26,5 - 27,0 Gew.-%. Die Latices A-F enthalten folgende Schwefelmengen im Ansatz:

| Latex | A | B | C | D | E | F | G | |
|---|---|---|---|---|---|---|---|---|
| Schwefeldispersion (50 %ig) | 1 | 2 | 3 | 4 | 7,2 | 9 | 12 | (g) |

**Beispiel 2 bis 4**

Je 40 kg der mit Phenothiazin abgestoppten Latices werden mit 120 g TETD versetzt und bei 40° peptisiert. Anschließend wird der pH mit Essigsäure auf einen Wert <7 eingestellt, das Polymerisat nach Zusatz von weiteren 145 g TETD durch Gefrierkoagulation gefällt und getrocknet.

Die Schwefelgehalte und Mooney-Viskositäten sind in der folgenden Tabelle angegeben, wobei Beispiel 2 ein Vergleichsbeispiel ist.

**Beispiel 5 bis 9**

Je 40 kg der mit TETD abgestoppten Latices und Latexmischungen werden mit 100 g Dibutyldithiocarbonat versetzt und nach 5 Stunden nach Zusatz von 180 g TETD bei einem pH-Wert <7 durch Gefrierkoagulation gefällt und getrocknet. Die Schwefelgehalte und Mooney-Viskositäten sind in der folgenden Tabelle angegeben, wobei Beispiel 5 ein Vergleichsbeispiel ist.

| Beispiel | Gew.-% der Latices in der Mischung (fest auf fest) | | | | | | | Gew.-% Schwefel bezogen auf Monomermenge | Mooney-Viskositäten (ME) |
|---|---|---|---|---|---|---|---|---|---|
| | A | B | C | D | E | F | G | | |
| 2 | - | - | - | - | - | 100 | - | 0,45 | 99 |
| 3 | - | 30 | - | - | - | - | 70 | 0,45 | 52 |
| 4 | - | - | - | 40 | - | - | 60 | 0,44 | 50 |
| 5 | - | - | - | - | 100 | - | - | 0,36 | 58 |
| 6 | 23 | - | - | - | - | 77 | - | 0,36 | 58 |
| 7 | - | 26 | - | - | - | 74 | - | 0,36 | 56 |
| 8 | - | - | 30 | - | - | 70 | - | 0,36 | 54 |
| 9 | - | - | - | 36 | - | 64 | - | 0,36 | 54 |

**Beispiele 10 - 17 Vulkanisatfestigkeit**

Eine Polymer-Rußmischung nach ISO-Norm 2475 wird bei 150°C in 3 Stufen vulkanisiert (20, 40, 80 Min.). Man bestimmt die Festigkeit der entsprechenden proben nach DIN 53 455. Es wird jeweils der Mittelwert der 3 Stufen angegeben.

| Beispiel | 10 | 11 | 12 | 13 | 14 | 15 | 16 | 17 |
|---|---|---|---|---|---|---|---|---|
| Polymer aus Beispiel | 2 | 3 | 4 | 5 | 6 | 7 | 8 | 9 |
| Festigkeit (MPa) | 19,5 | 21,6 | 21,4 | 19,8 | 22,0 | 21,8 | 21,9 | 22,0 |

Beispiele 10 und 13 sind Vergleichsbeispiele.

POOR QUALITY

## Beispiele 18 - 22 Dynamisches Verhalten der Vulkanisate

Die Polymeren werden wie in Beispiel 10 - 17 vulkanisiert und die Rißbestimmung nach einer Alterung von 7 Tagen bei 100°C nach De Mattia durchgeführt. Der Dauerknickversuch mit der De Mattia-Maschine wird nach DIN 53 522 ausgeführt. Ausgewerter werden die Anzahl an Kilo-Cyclen bis zur Rißbildung für die in der Norm angegebenen Stufen. Im vorliegenden Fall werden die Kilo-Cyclen aller Stufen dann gemittelt.

| Beispiel | 18 | 19 | 20 | 21 | 22 |
|---|---|---|---|---|---|
| Polymer aus Beispiel | 5 | 6 | 7 | 8 | 9 |
| Rißbestimmung (Kilo-Cyclen) | 243 | >500 | >500 | >500 | >500 |

**Beispiel 18 ist ein Vergleichsbeispiel.**

### Patentansprüche

1. Verfahren zur Herstellung von schwefelmodifizierten, vulkanisierbaren Chloprenfestkautschuken mit Viskositäten von 88 ME bis 35 ME mit Schwefelgehalten von etwa 0,3 bis 0,45 Gew.-%, dadurch gekennzeichnet, daß man Chloropren in Gegenwart von 0,05 bis 0,40 Gew.-% Schwefel zu einem Latex I polymerisiert, Chlopren in Gegenwart von 0,5 bis 1,5 Gew.-% Schwefel zu einem Latex II polymerisiert, die Latices I und II, gegebenenfalls zusammen mit weiteren schwefelmodifizierten Polychloroprenlatices im Verhältnis 4:1 bis 1:4 (bezogen jeweils auf Feststoff) mischt, die Mischung peptisiert und zum Festkautschuk aufarbeitet, wobei sich die Prozentangaben auf die Monomermenge beziehen.

Verfahren nach Anspruch 1, dadurch gekennzeichnet, daß bis zu 10 Gew.-% des Chloroprens durch andere copolymerisierbare Monomere ersetzt sind.

Verfahren nach Anspruch 1, dadurch gekennzeichnet, daß bis zu 5 Gew.-% des Chloroprens durch 2,3-Dichlorbutadien ersetzt sind.

### Claims

1. A process for the production of sulfurmodified, vulcanisable solid chloroprene rubbers having viscosities of from 88 to 35 ME and sulfur contents of from about 0.3 to 0.45 % by weight, characterised in that chloroprene is polyermised in the presence of from 0.05 to 0.40% by weight of sulfur to form a latex I, chloroprene is polymerised in the presence of from 0.5 to 1.5% by weight of sulfur to form a latex II, latices I and II are mixed, optionally together with other sulfur-modified polychloroprene latices, in a ratio of from 4:1 to 1:4 (based in each case on solids) and the mixture is peptised and worked up to form the solid rubber, the percentages quoted being based on the quantity of monomer.

2. A process according to Claim 1, characterised in that up to 10% by weight of the chloroprene is replaced by other copolymerisable monomers.

3. A process according to Claim 1, characterised in that up to 5% by weight of the chloroprene is replaced by 2,3-dichlorobutadiene.

### Revendications

1. Procédé de production de caoutchoucs solides de chloroprène vulcanisables, modifiés par le soufre, ayant des viscosités de 68 ME à 35 ME avec des teneurs en soufre d'environ 0,3 à 0,45 % en poids, caractérisé en ce qu'on polymerise du chloroprene en presence de 0,05 à 0,40 % en poids de soufre en un latex I, on polymérise du chloroprène en presence de 0,5 à 1,5 % en poids de soufre en un latex II, on mélange les latex I et II, éventuellement avec addition d'autres latex de polychloroprene modifiés par le soufre dans un rapport de 4:1 à 1:4 (dans chaque cas par rapport à la matière solide), on peptise le mélange et on le transforme en caoutchouc solide, les indications de pourcentages se rapportant à la quantité de monomère.

2. Procédé suivant la revendication 1, caractérisé en ce que d'autres monomères copolymérisables remplacent jusqu'à 10 % en poids du chloroprène.

3. Procédé suivant la revendication 1, caractérisé en ce que du 2,3-dichlorobutadiene remplace jusqu,à 5 % en poids du chloroprène.